# EUROPÄISCHE PATENTANMELDUNG

(11) **EP 4 220 113 A1**
(43) Veröffentlichungstag der Anmeldung: **02.08.2023**
(21) Anmeldenummer: 23156091.3
(22) Anmeldetag: 23.09.2015
(51) Int. Cl.: G01M 3/04

(54) **BEDIENVERFAHREN FÜR EIN GASSPÜRGERÄT**

(30) Priorität: 23.09.2014 DE 102014013822
(62) Teilanmeldung aus: 15791495.3
(71) Anmelder: Schütz GmbH Messtechnik, 77933 Lahr (DE)
(72) Erfinder: HEIMBURGER, Volker, 77974 Meissenheim (Kürzel) (DE)
(74) Vertreter: mepat Patentanwälte

(57) **Zusammenfassung**

Die vorliegende Erfindung betrifft ein Bedienverfahren zum Aufspüren eines austretenden Gases eines gasführenden Systems mit einem Gasspürgerät mit zumindest einer Gaseinsaugöffnung (5), die fluidisch mit zumindest einem Sensor zur Gasmessung verbunden ist, und das mit einer Positionsbestimmungsvorrichtung und einer Datenverarbeitungsvorrichtung mit einem Speicher kommunikativ gekoppelt ist, wobei der Sensor und die Positionsbestimmungsvorrichtung zur Datenübertragung mit der Datenverarbeitungsvorrichtung verbunden sind, und das zumindest ein Bedienelement (2) aufweist, das operativ mit der Datenverarbeitungsvorrichtung verbunden ist. Das Verfahren umfasst die Schritte:
a) Bewegen der Gaseinsaugöffnung (5) des Gasspürgeräts entlang eines Messpfades, dabei mit dem Sensor an zumindest einem Messpunkt Erfassen zumindest eines Gasmesswerts eines austretenden Gases,
b) Auslösen des Bedienelements (2) und mit Auslösen des Bedienelements (2) Korrelieren des momentanen Gasmesswerts mit dem Auslösezeitpunkt und der Positionsangabe, die durch die Positionsbestimmungsvorrichtung erfasst worden ist, und
c) durch mit dem Auslösen des Bedienelements (2) Auslösen eines Speichervorgangs und dabei Speichern der korrelierten Werte in dem Speicher der positionskorrelierten und zeitkorrelierten Werte in den Speicher der Datenverarbeitungsvorrichtung.

## Beschreibung

Die nachfolgende Erfindung bezieht sich auf ein Bedienverfahren für ein Gasspürgerät.

Gasspürgeräte an sich sind aus dem Stand der Technik bekannt; so offenbart US 2011/219855 A1 ein Verfahren zur Leckerkennung in einer unterirdischen Flüssigkeitsleitung wie einer Wasserleitung, indem Gas, das in einem sehr niedrigen Anteil in der Atmosphäre auftritt, durch einen Diffusor in die Leitung eingespritzt wird. Entlang der Leitung an der Oberfläche werden mit einem Gasspürgerät an mehreren Messstellen Messungen durchgeführt. Ein überhöhter Anteil des Gases zeigt ein Leck in der Leitung an.

In JP 2012 168683 A ist ein tragbares Gasdetektionsgerät beschrieben, das bspw. eine Gaskonzentration auf einem Display anzeigt und bei Überschreitung eines Wertes ein Warnsignal ausgibt. Mit diesem Gasdetektionsgerät sollen Arbeiter vor unsichtbaren und geruchslosen Gasen geschützt werden.

Auch über das Internet werden Gasmessgeräte beworben, so das "SAFESITE Multi-Threat Detection System", http://www.tradewaysusa.com/Catalogue-New/ Detection &_Identification/Chemical/SafeSite/Safesite.pdf. Dort wird ein Messgerät beworben, das auch Gaskonzentrationen ermitteln kann und über ein über weite Distanzen reichendes drahtloses Kommunikationssystem verfügt.

Unterirdisch verlegte Gasrohrnetze müssen in regelmäßigen Abständen auf Leckagen überprüft werden. Hierzu kommen so genannte Gasspürgeräte zum Einsatz, bei denen es sich um Instrumente handeln kann, bei denen die eigentliche Messsonde über ein Handteil gehandhabt werden kann, das auf verschiedene Weise mit dem Analysengerät zwecks Auswertung verbunden ist. Das Gasspürgerät wird bei der Messung von einem Bediener dem Verlauf der Rohrleitung entsprechend über den Boden geführt.

Damit die Messung nicht durch Fremdgase gestört wird, ist die Gasansaugöffnung beispielsweise Teil einer Teppich- oder Glockensonde; die Bodenmessstelle wird dadurch zuverlässig vor störenden Einflüssen abgeschirmt.

Ähnlich erfolgt auch die Untersuchung anderer gasführender Systeme, die nicht im Boden verlegte Gasrohrnetze, sondern etwa Leitungen in Kraftfahrzeugen oder von Anlagen der chemischen Industrie oder sonstigen Anlagen sind: Ein Bediener führt die Messsonde entlang einer zu untersuchenden Leitung oder eines Schlauches.

Das Analysegerät ist üblicherweise für die Messung so eingestellt, dass es bei Überschreiten einer einstellbaren Maximalkonzentration bestimmter Einzelgase oder Gasgemische einen Alarm auslöst, der dem Bediener zur Kenntnis gebracht wird.

Wenn der Bediener den gemessenen Wert oder einen aufgetretenen Alarm an einer Position protokollieren will, so geschieht dies bis dato, indem der Bediener die genaue Position, optional die gemessene Gaskonzentration und/oder weitere Informationen wie Uhrzeit, Datum etc. in ein Messprotokoll aufnimmt. Es kann dabei eine digitale Kommunikation zu einem mitgeführten Zusatzgerät, bspw. ein Tablet PC, Smartphone o. ä., vorgesehen sein, über die die gemessenen Konzentrationen und die GPS-Position aufgezeichnet werden.

Ausgehend von diesem Stand der Technik liegt der vorliegenden Erfindung die Aufgabe zu Grunde, ein Bedienverfahren für ein Gasspürgerät zu schaffen, mit dem eine verbesserte Effizienz von Leckageprüfungen erreicht werden kann. Diese Aufgabe wird durch das Bedienverfahren mit den Merkmalen des Anspruchs 1 gelöst.

Das erfindungsgemäße Bedienverfahren zum Aufspüren eines austretenden Gases eines gasführenden Systems mit einem Gasspürgerät mit zumindest einer Gaseinsaugöffnung, die fluidisch mit zumindest einem Sensor zur Gasmessung verbunden ist, und das mit einer Positionsbestimmungsvorrichtung und einer Datenverarbeitungsvorrichtung mit einem Speicher kommunikativ gekoppelt ist, wobei der Sensor und die Positionsbestimmungsvorrichtung zur Datenübertragung mit der Datenverarbeitungsvorrichtung verbunden sind, und das zumindest ein Bedienelement aufweist, das operativ mit der Datenverarbeitungsvorrichtung verbunden ist,
umfasst die folgenden Schritte:
a) Bewegen der Gaseinsaugöffnung des Gasspürgeräts entlang eines Messpfades, dabei mit dem Sensor an zumindest einem Messpunkt Erfassen zumindest eines Gasmesswerts,
b) Auslösen des Bedienelements und mit Auslösen des Bedienelements und Korrelieren des Gasmesswerts mit dem Auslösezeitpunkt und der Positionsangabe, die durch die Positionsbestimmungsvorrichtung erfasst worden ist, und
c) durch mit dem Auslösen des Bedienelements Auslösen eines Speichervorgangs und dabei Speichern der korrelierten Werte in dem Speicher der positionskorrelierten und zeitkorrelierten Werte in den Speicher der Datenverarbeitungsvorrichtung.

Unter Gasmesswert kann der tatsächliche Messwert und/oder eine binärere Zustandsvariable, die das Überschreiten des Grenzwerts angibt, verstanden werden. Mit dem erfindungsgemäßen Bedien-bzw. Betriebsverfahren für das Gasspürgerät ist ein Verfahren geschaffen, das einen kontinuierlichen Inspektionsprozess, insbesondere von Gaspipelines, erlaubt, das besser als bisher ausgeführt werden kann. Zudem wird der Einfluss menschlicher Fehler eliminiert, da der Bediener ("Gasspürer") mit der Protokollierung der Messwerte nichts mehr zu tun hat; er betätigt lediglich das Bedienelement, das Abspeichern der Position und des Gasmesswerts sowie ggf. weiterer Daten wie Datum, Uhrzeit, Temperatur usw. geschieht automatisch.

Das Gasspürgerät hat eine oder mehrere Gaseinsaugöffnung(en), die fluidisch mit zumindest einem Sensor zur Gasmessung verbunden ist oder sind. Das Gasspürgerät ist mit einer Positionsbestimmungsvorrichtung und einer Datenverarbeitungsvorrichtung mit Speicher kommunikativ verbunden oder ausgestattet. Dabei sind der Sensor und die Positionsbestimmungsvorrichtung zur Datenübertragung mit der Datenverarbeitungsvorrichtung verbunden. Ferner hat das Gasspürgerät zumindest ein Bedienelement, das operativ mit der Datenverarbeitungsvorrichtung verbunden ist. Das Bedienelement ist dazu vorgesehen, bei Betätigung einen Speichervorgang auszulösen, durch den zu dem Auslösezeitpunkt zumindest ein Gasmesswert positionskorreliert und zeitkorreliert in dem Speicher Datenverarbeitungsvorrichtung abgespeichert wird.

Damit wird erfindungsgemäß erreicht, dass durch einen einfachen "Knopfdruck", wenn etwa das Bedienelement ein Taster ist, ohne separates, händisches Protokollieren verarbeitbar festgehalten wird, zu welchem Zeitpunkt und an welchem Ort sich die Sonde befindet und ob dort ein Gasaustritt zu verzeichnen ist. Abhängig von der Art der Sonde und der Art des aufgenommenen Messwerts und der entsprechenden Auflösung kann etwa eine Gaskonzentration an einem Ort zu einer Zeit aufgenommen und gespeichert werden und es kann auch eine unmittelbare Verarbeitung der aufgenommenen Daten erfolgen; etwa wenn diese später archiviert werden sollen oder an eine Leitstelle weitergegeben werden sollen oder wenn ein unerwünscht hoher Messwert aufgenommen wird, der zum sofortigen Handeln veranlasst - bei einem Leck in einem Rohrnetz etwa. Ferner können ohne Weiteres Messwerte langfristig aufgenommen und entweder bei ein- und derselben oder von verschiedenen Messstellen verglichen und archiviert werden.

Unter Verwendung des Gasspürgeräts gemäß dem erfindungsgemäßen Bedienverfahren wird daher auch der Messfluss bei Trassenprüfungen deutlich verbessert. Wird eine unzulässig hohe Konzentration eines Einzelgases oder Gasgemisches festgestellt, betätigt der Bediener das Bedienelement und erfasst die aktuelle Position, die Uhrzeit/Datum und den Gasmesswert. Am Ende eines vorgegebenen Messzeitraumes können die im Speicher der Datenverarbeitungsvorrichtung hinterlegten "Ereignisse" ausgelesen werden und zur weiteren Verwendung weitergeleitet werden; etwa, wenn die gemessenen Werte Wartungsarbeiten veranlassen.

Alternativ oder zusätzlich kann vorgesehen sein, mittels des Bedienelements eine Streckenaufzeichnung zu starten, pausieren bzw. zu stoppen.

"Gasmesswert" kann hierin beispielsweise generell heißen, das Vorliegen eines Gases wie Methan-, Ethan-, Propan-, Wasserstoff-, Acetylen-, Ethylen- und/oder Kohlstoffdioxid oder eines anderen sensorisch erfassbaren Gases oder Gasgemisches generell, also konzentrations- oder aktivitätsunabhängig und somit durch eine qualitative Messgröße zu erfassen; die Messung kann bspw. über einen Sprungsensor, d. h., einen Sensor, der keine kontinuierliche Kennlinie hat, erfolgen. Es kann aber auch eine quantitative Erfassung, etwa die Messung der Konzentration oder Aktivität erfolgen und es können direkte oder indirekte Messgrößen resp. Parameter erfasst werden.

Das Gasspürgerät kann eine Sonde aufweisen, die einenends die Gaseinsaugöffnung aufweist und deren anderes Ende mit dem Sensor fluidisch verbunden ist, etwa zusätzlich über eine Schlauchleitung. Bei der Sonde kann es sich etwa um eine Teppichsonde, Glockensonde, Raumsonde oder Bohrlochsonde handeln. Die Bohrlochsonde kann in einer bevorzugten Ausführungsform einen Bohrlochstopfen haben. Alternativ oder zusätzlich kann die Sonde einen Stiel oder ein Rohr aufweisen. An dem Ende mit Gaseintrittsöffnung kann auch ein Rad oder ein Räderpaar zum Abrollen der Sonde über einer Messfläche angeordnet sein.

Mit einer Bohrlochsonde wird der Trassenverlauf nicht kontinuierlich überprüft, sondern in bestimmten Abständen Bohrungen über der Pipeline niedergebracht, geeigneter Weise in Abständen von ca. 2 bis 5 m. Die Bohrlochsonde wird dann in diese Bohrlöcher eingesteckt, wobei der Bohrlochstopfen zum Abschirmen von Störgasen aus der Umgebung dient. Die Bohrlochsonde kann insbesondere mehrere Gaseinsaugöffnungen über ihren Umfang verteilt haben, sodass eine winkelunabhängige, gemittelte Messung des Bohrlochs erfolgen kann.

Geeigneter Weise ist das Bedienelement ein Taster, der bei den handbetätigten Sonden am Handteil vorliegt, das an dem von der Gaseinsaugöffnung abgewandten Ende der Sonde vorliegt. Das Handteil kann dabei auch lösbar mit dem Stiel bzw. Rohr verbunden sein. So kann der Bediener die Sonde einhändig bedienen; er kann sie halten und führen und mit einem Finger das Speichern und Erfassen der Messwerte auslösen.

Neben dem hierin beispielhaft genannten Taster können auch andere Bedienelemente geeignet sein, beispielsweise Schalter. Es kann sogar vorgesehen sein, dass das Bedienelement kein Hardware-Schalter ist, sondern ein in eine Software der Datenverarbeitungsvorrichtung integrierter Software-Schalter, der dem Benutzer auf einem Display angezeigt wird, das am Handteil vorliegt.

Das Bedienelement kann vorteilhaft in einer ergonomischen Position an dem Handteil angeordnet sein, sodass das Bedienelement ohne Umgreifen betätigt werden kann. Das Bedienelement kann beispielsweise so an dem Handteil angeordnet sein, dass es bequem mit dem Daumen betätigt werden kann.

In der Ausführungsform mit Bedienelement am Handteil wird ermöglicht, dass ein Handteil mit Bedienelement beispielsweise auch nachgerüstet werden kann, sodass im Fundus vorhandene Sonden auch mit der erfindungsgemäßen Funktionalität ausgestattet werden können. Hierzu entsprechen die Anschlüsse des Handteils zur mechanischen, fluidischen und/oder elektrischen Kontaktierung vorteilhaft der bisher verwendeten Anschlusskonfiguration; alternativ kann auch ein Adapter vorgesehen werden, um die Anschlusskonfiguration des Handteils an die Anschlusskonfiguration der Sonde anzupassen.

Üblicherweise wird, wenn mit der Teppichsonde eine Undichtigkeit festgestellt wurde, eine weitergehende Überprüfung mit einer Bohrlochsonde vorgenommen. Hierzu kann dann das Handteil mit der Bohrlochsonde gekoppelt werden. Es kann dabei dann vorgesehen sein, das Bedienelement ein weiteres Mal zu betätigen, um abzuspeichern, dass die nachfolgende Messung eine Bohrlochmessung und keine Oberflächenmessung mit der Teppichsonde ist.

Gemäß einer noch weiteren Ausführungsform des erfindungsgemäßen Bedienverfahrens kann der Gasmesswert ein tatsächlicher sensorisch erfasster Konzentrations- oder Aktivitätswert sein. Alternativ oder zusätzlich kann es sich dabei um eine binäre Zustandsvariable handeln, die das Überschreiten eines voreinstellbaren Grenzwerts beschreibt.

Ferner kann die Positionsbestimmungsvorrichtung eine satellitengestützte Positionsbestimmungsvorrichtung sein, etwa ein GPS-Empfänger. Die Positionsbestimmungsvorrichtung kann insbesondere in einen mobilen Computer integriert sein. Mobile Computer können Smartphones, Tablets, Laptops, PDAs und ähnliche Geräte sein. Alternativ kann es sich bei der Positionsbestimmungsvorrichtung auch um eine nicht-satellitengestützte Vorrichtung handeln, die dazu vorgesehen ist, eine Relativposition zu einem Referenzpunkt zu bestimmen, beispielsweise mit Hilfe eines Leitstrahls.

Das Gasspürgerät kann zumindest eine Ausgabevorrichtung aufweisen, etwa eine optische, akustische und/oder haptische Ausgabevorrichtung zur Ausgabe der Gasmesswerte, die kommunikativ mit der Datenverarbeitungsvorrichtung verbunden ist. Die Ausgabevorrichtung ist insbesondere dazu vorgesehen, einen Warnhinweis auszugeben, wenn eine vorbestimmte Gaskonzentration überschritten wird. Alternativ zum Ausgeben des Warnhinweises kann auch der vollständige Messwert eines oder mehrerer Gase angezeigt werden, da dies erfahrenen Technikern eine sofortige Einschätzung hinsichtlich der Gefährdungslage erlaubt.

Die Datenverarbeitungsvorrichtung kann in einer weiteren Ausführungsform eine externe Datenverarbeitungsvorrichtung sein, etwa ein mobiler Computer, beispielsweise ein Laptop-Computer, ein Tablet oder ein Smartphone. Alternativ kann die Datenverarbeitungsvorrichtung zusammen mit der Positionsbestimmungsvorrichtung in einem gemeinsamen Gehäuse untergebracht sein, etwa in dem Handteil.

Gemäß einer Weiterbildung des Verfahrens kann die Gaseinsaugöffnung im Schritt a) entlang einer Folge beliebiger oder vorbestimmter Messpunkte bewegt werden.

Im Schritt b) kann dann zusätzlich ein Messpfad aus der Folge der Messpunkte aufgezeichnet werden.

Anders als in der ersten Ausführungsform des Bedienverfahrens wird die Gaseinsaugöffnung hierbei nicht an einem vorgegebenen gasführenden System entlang geführt, sondern es können vorgegebene Messpunkte eines Systems auch in beliebiger Reihenfolge abgefahren werden. Übliche Abstände liegen bei Gaspipelines dabei im einstelligen Meterbereich, typischerweise weniger als 2,5 m. Diese Messmethode kommt bei der Überprüfung von Gasleitungen meist bei Bohrlochprüfungen zum Einsatz.

Ein Einsatz in anderen Bereichen, beispielsweise zur Leckortung an Kraftfahrzeugen ist auch denkbar; die Sonde wird dann an die zu prüfenden Messstellen geführt.

Dazu wird erfindungsgemäß nach einer weiteren Ausführungsform des Verfahrens vorgeschlagen, die vorbestimmten Messpunkte in Schritt b) über das Bedienelement durch einen Code zuzuordnen. Die Betätigung des Bedienelements dient dabei quasi der Identifizierung der Messstellen. Im einfachsten Fall ist beispielsweise vorgesehen, das Bedienelement so oft zu betätigen, wie es der fortlaufenden Nummerierung der Messstellen entspricht; also beispielsweise für Messstelle Nr. 1: Einmal betätigen des Bedienelements, für Messstelle Nr. 5: Fünfmal betätigen usw. Hierdurch wird ermöglicht, die Messstellen in beliebiger Reihenfolge abzufahren.

Dieses Verfahren eignet sich in besonderem Maße für Überprüfungen an Anlagen wie bspw. Kraftfahrzeugen, bei denen es vorkommen kann, dass einzelne Messstellen temporär unzugänglich sind (bspw. erhöhte Temperatur) und daher eine andere Messstelle vorgezogen werden muss. Bei Überprüfungen an Kraftfahrzeugen ist es üblich, dass die Messungen nicht an beliebigen Orten erfolgen, sondern durch den Hersteller oder eine unabhängige Stelle vorgegeben werden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung.

Es zeigen:
- **Fig. 1**: eine Seitenansicht einer Raumsonde,
- **Fig. 2**: eine Seitenansicht einer Bohrlochsonde,
- **Fig. 3**: eine Seitenansicht eines Handteils.

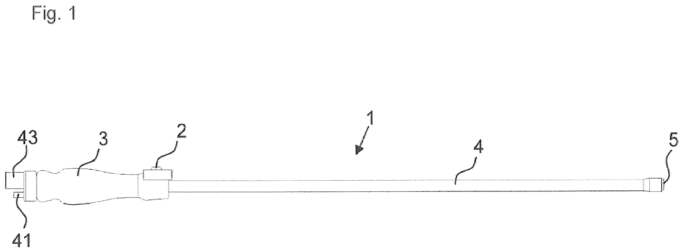

Die in **Fig. 1** gezeigte Raumsonde 1 ist dazu bestimmt, in einem Gasspürgerät für das erfindungsgemäße Bedienverfahren eingesetzt zu werden, das darüber hinaus noch aus einem Gassensor, einer Datenverarbeitungsvorrichtung mit Speicher und einer Positionsbestimmungsvorrichtung besteht. Prinzipiell lassen sich die im Folgenden in Zusammenhang mit der Raumsonde 1 beschriebenen Vorteile auch auf Teppichsonden und Glockensonden übertragen, die ähnlich aufgebaut sind.

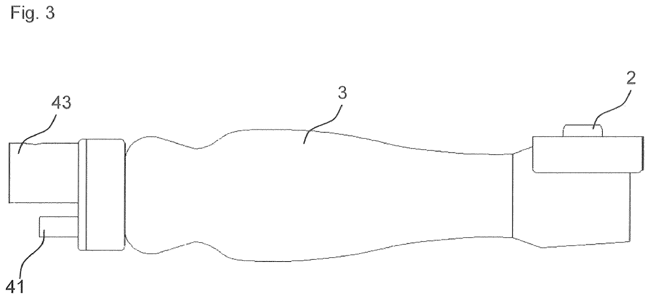

Die Raumsonde 1 hat ein Rohr 4, an dessen in der Abbildung rechten Ende eine Gaseinsaugöffnung 5 vorliegt. Am anderen Ende des Rohrs 4 ist ein Handteil 3 angeordnet, das von dem Rohr 4 getrennt werden kann (siehe hierzu **Fig. 3**). An dem Handteil 3 ist ein Taster 2 angeordnet, dessen Signalleitung über den Signalanschluss 41 operativ mit der Datenverarbeitungsvorrichtung verbunden werden kann. Wird der Taster 2 betätigt, wird die momentane Position und optional der momentane Messwert eines Gassensors im Speicher der Datenverarbeitungsvorrichtung abgelegt.

Der Gassensor wird über den Gasanschluss 43, beispielsweise über eine Schlauchleitung, fluidisch mit der Gaseinsaugöffnung 5 verbunden.

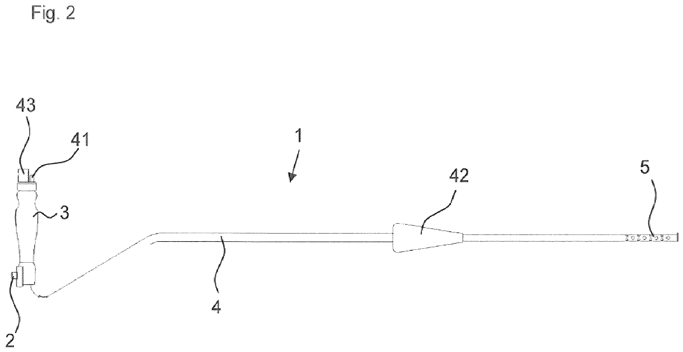

Eine alternative Ausführungsform der Sonde 1 ist in **Fig. 2** dargestellt. Die gezeigte Sonde 1 ist eine Bohrlochsonde, die an ihrem dem Handteil 3 abgewandten Ende über den Umfang verteilt mehrere Gaseinsaugöffnungen 5 hat, um eine umfänglich gemittelte Messung zu ermöglichen. Ferner ist über das Rohr 4 ein Stopfen 42 gezogen, der der Abdichtung des Bohrlochs gegenüber störenden Einflüssen der Umgebungsluft dient. Das Handteil 3 ist das gleiche wie schon in **Fig. 1** gezeigt. Die Krümmung des Rohrs 4 ist aus ergonomischen Gründen vorgesehen, sodass der Schwerpunkt der Sonde 1 zentrisch über dem Handteil 3 liegt und beim Handhaben keine Momentenbelastung auf den Bediener wirkt.

**Fig. 3** zeigt nur das Handteil 3, wobei die ergonomische Anbringung des Bedienelements 2 für Daumenbetätigung deutlich wird. Das Handteil 3 ist so gestaltet, dass es mit Sonden 1 verschiedener Bauformen gekoppelt werden kann und auch an bereits vorhandene Sonden 1 nachgerüstet werden kann, beispielsweise über einen Bajonettanschluss, Schraubgewinde o. ä. Das Rohr 4 wird mit dem in der Abbildung rechten Ende des Handteils 3 verbunden, während über die Anschlüsse 41,43 an der linken Seite die fluidische Anbindung an den Gassensor erfolgt und das Bedienelement 2 elektrisch kontaktiert wird.

## Patentansprüche

1. Bedienverfahren zum Aufspüren eines austretenden Gases eines gasführenden Systems mit einem Gasspürgerät mit zumindest einer Gaseinsaugöffnung (5), die fluidisch mit zumindest einem Sensor zur Gasmessung verbunden ist, und das mit einer Positionsbestimmungsvorrichtung und einer Datenverarbeitungsvorrichtung mit einem Speicher kommunikativ gekoppelt ist, wobei der Sensor und die Positionsbestimmungsvorrichtung zur Datenübertragung mit der Datenverarbeitungsvorrichtung verbunden sind, und das zumindest ein Bedienelement (2) aufweist, das operativ mit der Datenverarbeitungsvorrichtung verbunden ist,
umfassend die Schritte
a) Bewegen der Gaseinsaugöffnung (5) des Gasspürgeräts entlang eines Messpfades, dabei mit dem Sensor an zumindest einem Messpunkt Erfassen zumindest eines Gasmesswerts eines austretenden Gases,
b) Auslösen des Bedienelements (2) und mit Auslösen des Bedienelements (2) Korrelieren des momentanen Gasmesswerts mit dem Auslösezeitpunkt und der Positionsangabe, die durch die Positionsbestimmungsvorrichtung erfasst worden ist, und
c) durch mit dem Auslösen des Bedienelements (2) Auslösen eines Speichervorgangs und dabei Speichern der korrelierten Werte in dem Speicher der positionskorrelierten und zeitkorrelierten Werte in den Speicher der Datenverarbeitungsvorrichtung.

2. Bedienverfahren für ein Gasspürgerät nach Anspruch 1,
**wobei** das Ausführen des Schritts a), Bewegen der Gaseinsaugöffnung (5) des Gasspürgeräts, entlang einer Folge beliebiger oder vorbestimmter Messpunkte erfolgt;
dabei bevorzugt in Schritt b) zusätzlich Aufzeichnen eines Messpfades aus der Folge der Messpunkte.

3. Bedienverfahren nach Anspruch 2,
**wobei** die vorbestimmten Messpunkte in Schritt b) über das Bedienelement (2) durch einen Code zugeordnet werden.

4. Bedienverfahren nach zumindest einem der Ansprüche 1 bis 3,
**wobei**
das Gasspürgerät eine Sonde (1) aufweist, die einenends zumindest eine Gaseinsaugöffnung (5) aufweist und anderenends mit dem Sensor fluidisch verbunden ist, wobei die Sonde (1) bevorzugt eine Teppichsonde, Glockensonde oder Bohrlochsonde ist, besonders bevorzugt mit einem Bohrlochstopfen (42), und/oder einen Stiel oder ein Rohr (4) aufweist.

5. Bedienverfahren nach zumindest einem der Ansprüche 1 bis 4,
**wobei**
das Bedienelement (2) ein Taster (2) ist, der bevorzugt an einem Handteil (3) angeordnet ist, das an dem vom der Gaseinsaugöffnung (5) abgewandten Ende der Sonde (1) vorliegt,
wobei bevorzugt das Handteil (3) lösbar mit dem Stiel oder Rohr (4) verbunden ist.

6. Bedienverfahren nach zumindest einem der Ansprüche 1 bis 5,
**wobei**
der Gasmesswert ein tatsächlicher sensorisch erfasster Konzentrations- oder Aktivitätswert und/oder eine binäre Zustandsvariable ist, die das Überschreiten eines voreinstellbaren Grenzwerts beschreibt.

7. Bedienverfahren nach zumindest einem der Ansprüche 1 bis 6,
**wobei**
die Positionsbestimmungsvorrichtung eine satellitengestützte Positionsbestimmungsvorrichtung ist, bevorzugt ein GPS-Empfänger, die bevorzugt in einen mobilen Computer integriert ist.

8. Bedienverfahren nach zumindest einem der Ansprüche 1 bis 7,
**wobei**
das Gasspürgerät zumindest eine Ausgabevorrichtung aufweist, bevorzugt eine optische, akustische und/oder haptische Ausgabevorrichtung zur Ausgabe der Gasmesswerte, die kommunikativ mit der Datenverarbeitungsvorrichtung verbunden ist.

9. Bedienverfahren nach zumindest einem der Ansprüche 1 bis 8,
**wobei**
- die Datenverarbeitungsvorrichtung eine externe Datenverarbeitungsvorrichtung ist, bevorzugt ein mobiler Computer, oder
- die Datenverarbeitungsvorrichtung und die Positionsbestimmungsvorrichtung in einem gemeinsamen Gehäuse, bevorzugt in dem Handteil (3) vereinigt sind.
